# EUROPEAN PATENT SPECIFICATION

(11) **EP 3 285 248 B1**
(45) Date of publication and mention of the grant of the patent: **03.07.2019**
(21) Application number: 16306061.9
(22) Date of filing: 16.08.2016
(51) Int. Cl.: G09C 1/00, G06F 21/55

(54) **BLOCKCHAIN-BASED SECURITY THREAT DETECTION METHOD AND SYSTEM**
VERFAHREN UND SYSTEM ZUR DETEKTION EINES BLOCKCHAIN-BASIERTEN SICHERHEITSRISIKOS
PROCÉDÉ ET SYSTÈME DE DÉTECTION DE MENACES À LA SÉCURITÉ SUR LA BASE DE CHAÎNE DE BLOCS

(43) Date of publication of application: 21.02.2018
(73) Proprietor: Alcatel Lucent, 91620 Nozay (FR)
(72) Inventor: SIGNORINI, Matteo, 91620 Nozay (FR); DI PIETRO, Roberto, 91620 Nozay (FR); KANOUN, Wael, 91620 Nozay (FR)
(74) Representative: Loyer & Abello

(56) References cited:
- Vitalik Buterin: "CRITICAL UPDATE Re: DAO Vulnerability - Ethereum Blog", , 17 June 2016 (2016-06-17), XP055346423, Retrieved from the Internet: URL:https://blog.ethereum.org/2016/06/17/c ritical-update-re-dao-vulnerability/ [retrieved on 2017-02-15]
- Anonymous: "Errata Security: Ethereum/TheDAO hack simplified", , 18 June 2016 (2016-06-18), XP055346424, Retrieved from the Internet: URL:http://blog.erratasec.com/2016/06/ethe riumdao-hack-similfied.html#.WKSQ6XrMdAM [retrieved on 2017-02-15]
- Melanie Swan: "Blockchain: Blueprint for a New Economy" In: "Blockchain: Blueprint for a New Economy", 8 February 2015 (2015-02-08), O'Reilly, XP055279098, ISBN: 978-1-4919-2049-7 * paragraph [0002] *

## Description

### Field of the invention

The invention relates to the technical field of security within a network of connected devices implementing blockchain technology.

### Background

The Internet of Things has brought on a considerable number and a wide range of connected and smart devices on the market, which are able to communicate/cooperate with each other and to be remotely accessed via Internet. This creates specific threats to the security and privacy of both the involved connected and smart devices, and the other devices connected to them. Indeed weak security systems embedded in connected and smart devices may be exploited to get into the network and, from there, to get access to more powerful devices such as servers, laptops, etc.

To address these security issues, current systems are based on log analysis and data correlations and are aimed at building attack models and risk mitigation strategies on top of them. Malware however is getting more and more sophisticated, capable of bypassing monitoring systems, by removing its own footprint, and by moving quickly from one victim (ie: connected device) to the next in order to make it hard for the monitoring system to find it and track it.

More recently, blockchain technology was devised and published (originally in the context of Bitcoin) allowing to securely share or process data between multiple parties over a network of non-trusted peers. Further details can be found in "Blockchain: Blueprint for a new economy" written by Melanie Swan and published by O'Reilly.

Ethereum is another block chain that has been attacked exploiting a vulnerability coming from fork chains that are accidentally created when two transactions are made at the same moment. The attack is based on a split function which recursively drain the blockchain on a fork chain. A soft fork has been proposed for cutting the fork chain making it independent of the original chain. The soft fork is explained and debated on the Ethereum Blog in "CRITICAL UPDATE Re: DAO Vulnerability" made by Vitalik Buterin.

### Summary

The invention provides for blockchain-based security threat detection method and system.

A method is provided of detecting a security threat within a network of connected devices that share a ledger of transactions between them under the form of exchanged blockchain transactions, with the steps of (a) building enhanced blockchain structure by keeping all the information of the forked chains; (b) inspecting forked chains in the enhanced blockchain structure; (c) detecting an anomaly based on patterns in the forked chains; (d) identifying the security threat by reviewing all transactions of the ledger in the forked chain and the blockchain transactions leading up to the network attack entry point; and (e) exchanging enhanced blockchain transactions between connected devices.

More particularly, the invention provides for a method of detecting a security threat within a network of connected devices that share a ledger of transactions between them under the form of exchanged blockchain messages, comprising the steps of:
- compares the new blocks with the one locally stored. If they do not match and the number of blocks received is larger than the number of locally stored blocks, the local chain is labeled as a fork
- building an enhanced blockchain by adding forked chains discarded at a device, to a standard blockchain;
- inspecting added forked chains in the enhanced blockchain;
- detecting an anomaly based on patterns in the added forked chains in the enhanced blockchain;
- identifying the security threat by reviewing all transactions of the ledger in the forked chain in which an anomaly has been detected, and in the standard blockchain leading up to the network attack entry point; and
- including the enhanced blockchain in the exchanged messages.

In one embodiment of the method, simultaneous processing of the standard blockchain, and building the enhanced blockchain, take place at a device.

In another embodiment of the method, the step of detecting an anomaly further comprises the step of detecting behaviors in the added forked chains that were not accepted by the whole network.

A device is also provided, to be connected to such a network of connected devices that share a ledger of transactions between them under the form of exchanged blockchain messages, which comprises (a) a miner being configured to analyze and update blockchain transactions in a blockchain database; (b) a fork broadcast being configured to extract forked chains from the blockchain transactions and to send them to other devices; (c) a chain manager being configured to build an enhanced blockchain by adding all forked chains to the original blockchain; and (d) an anomaly detection system being configured to inspect the enhanced blockchain and detect security threats.

More particularly, the invention provides for a device to be connected to such a network, with the device comprising a miner being configured to analyze and update received blockchain messages in a blockchain database, and further comprising:
- a fork broadcast being configured to extract forked chains from the blockchain messages by comparing received blocks with locally stored blocks, and if they do not match and the number of the received blocks is larger than the number of locally stored blocks, labeling the local chain as a fork;
- a chain manager being configured to add all forked chains to the blockchain messages in order to build an enhanced blockchain to be included in messages sent to other devices in the network; and
- an anomaly detection system being configured to inspect the enhanced blockchain and detect security threats.

In one embodiment the device further comprises:
- a transaction filter being configured to intercept blockchain messages and to forward them to both the miner and the chain manager, wherein blockchain messages are processed in parallel by the miner and the chain manager.

In yet another embodiment, the transaction filter in the device is further configured to collect metadata from the blockchain messages, and to discard duplicated blockchain messages received from the network.

In yet another embodiment, the device further comprises:
- a pattern inspector configured to detect behaviors in the forked chains that were not accepted by the whole network.

In yet another embodiment, the device further comprises:
- a threat detector configured to, once a behavior has been detected by the pattern inspector, inspect the sections of the standard blockchain linked to the forked chains containing the detected behavior, in order to recover the source of a security threat.

In yet another embodiment, the device further comprises a threat database configured to collect information about the security threat.

The invention is defined by the independent claims. Preferred embodiments are set out in the dependent claims.

### Brief description of the drawings

These and other aspects of the invention will be apparent from and elucidated with reference to the embodiments described hereinafter, by way of example, with reference to the drawings.
Figure 1 is a representation of a network with connected devices implementing the blockchain technology (prior art).
Figure 2 is a functional representation of a connected device that performs mining in the network (prior art).
Figures 3 is a representation of a network with the blockchain-based security threat detection method and system according to the invention.
Figure 4 is a functional representation of a connected device that implements the blockchain-based security threat detection method and system according to the invention.
Figure 5 illustrates the enhanced blockchain built by the chain manager according to the invention.
Figure 6 illustrates the inspection performed on the enhanced blockchain by the threat detector.

### Detailed description of the embodiments

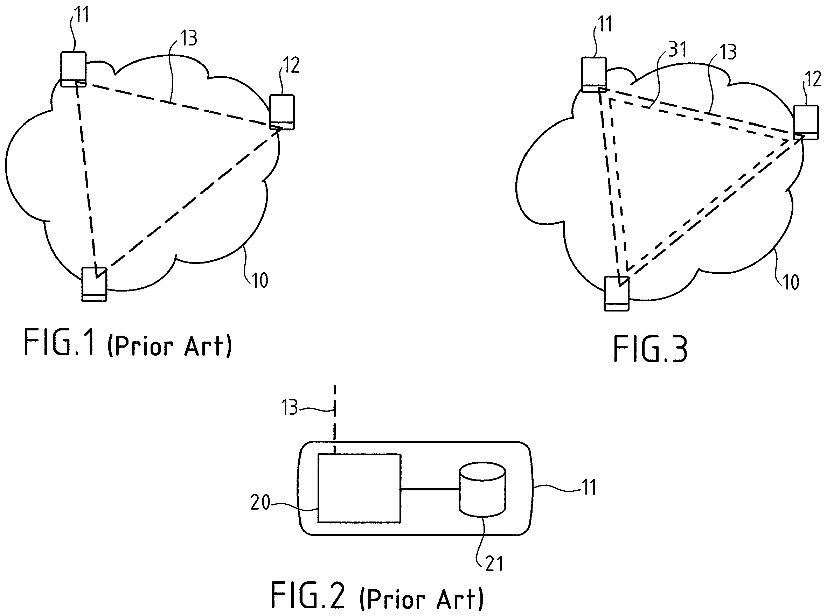

Figure 1 is a representation of a network (**10**) with connected devices (**11**, **12**) implementing the blockchain technology. Network 10 may be Wifi, 3G, LTE, Bluetooth, RFID/NFC, wired connections, or any type of network that supports protocols for exchanges of messages between connected devices over connections (**13**). The messages being exchanged can belong to one or multiple blockchain-based applications on different levels such as HTTP/FTP based applications (to keep track of network traffic), SSH/Telnet/RDP/VNC/VPN based applications (to keep track of remote accesses), RFID/NFC based applications (to keep track of physical interactions), etc.

A connected device (11) that acts as a validating peer within the network, including maintaining the ledger shared between connected devices, contains a miner (20) as illustrated on Figure 2. Messages (13) received by the miner contain standard blockchain transactions which are collected to build the next block within the chain. Once a new block has been built by the miner, or by another device within the network, it is added to the blockchain, written in a blockchain database (**21**) and sent in broadcast to the other devices. Once a device receives one or multiple blocks which have been built by other devices, it compares the new blocks with the one locally stored. If they do not match and the number of blocks received is larger than the number of locally stored blocks, the local chain is labeled as a fork. Once a fork is detected, the miner discards it and overwrites a portion/all of the blockchain with those new received blocks that were previously verified and accepted by the network and that form a longer chain. Forks are typically discarded as the blockchain is based on a concurrent mining process (i.e. each connected device locally contributes in the update of the chain), where temporary forks (i.e. parallel branches from the main chain) may be created and distributed in the network. These parallel branches , may lead to conflicting transactions between nodes/connected devices, which in the context of crypto-currencies for example, such as in the Bitcoin network, is particularly problematic.

In contrast, and according to the invention, on Figure 3 additional messages over connections (**31**) exchanged between connected devices make it possible to share not only the standard blockchain, but also all its forks, thus creating a bigger and enhanced blockchain that is used for security threat detection. A novel decentralized anomaly detection system based on the blockchain technology is thus provided.

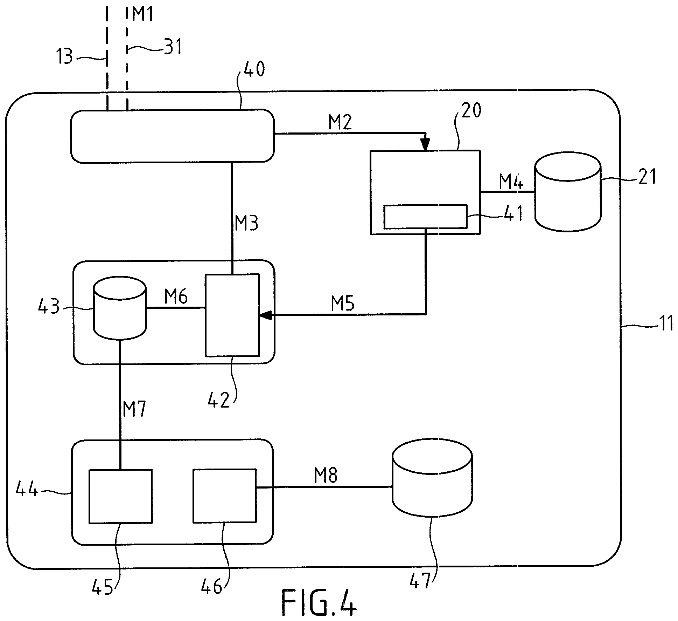

A connected device (11) according to the invention is illustrated on Figure 4. The device contains the miner (20) and the blockchain database (21). In addition, it contains:
- a transaction filter (**40**) that intercepts blockchain messages (**M1**) and forwards them to both the miner (with **M2** messages), and a chain manager (**42**) with **M3** messages. This parallel processing allows the un-interrupted (ie: not modified or slowed down) handling of standard blockchain protocol by the miner and the blockchain database, through **M4** message exchange. The transaction filter collects M1 metadata such as the message sender, the recipient, the timestamp, etc. but also discards duplicated messages as the blockchain technology is based on a broadcast model.
- a fork broadcast (**41**), added to the miner, extracts any forked chain (**M5**) before it is discarded and overwritten by the miner.
- a chain manager (**42**) receives M3 messages from the transaction filter, and M5 messages from the fork broadcast, and computes from them an enhanced blockchain composed of the standard blockchain, and of taken into account forked chains. As M3 and M5 do not describe the whole chain but rather updates on top of it, the chain manager retrieves through **M6** the blockchain built so far from a chain database (**43**), and then adds to that blockchain all the information obtained with M3 and/or M5. Once the enhanced blockchain has been computed, it is sent back through M6 to the chain database to keep the updated version of such enhanced blockchain. M3 and M5 do not necessarily reach the chain manager at the same time; the chain manager can thus receive either M3 messages (each time a standard blockchain message has been received) or M5 messages (each time M2 forces the miner to discard previous forks).
- an anomaly detection system (**44**) loads, with **M7,** the up to date version of the enhanced blockchain, containing the history of the network, from the chain database. The anomaly detection system is composed of two subsystems:
   - a pattern inspector (**45**): it detects and keeps track of unusual/unexpected behaviors which are found only in the forked chains (i.e. not accepted by the whole network) in order to detect suspicious patterns, such as a malicious attempt at hacking a SSH authentication, or a denial of service attack targeting a specific machine;
   - a threat detector (**46**): once a suspected behavior/pattern has been detected by the pattern inspector, the threat detector further inspects the forked chain in which the attack has been found and the portion of the standard blockchain linked to it in order to recover the source of such security threat/issue. Starting from the anomalies found by the pattern inspector, it exploits all the transactions downloaded from the forked chain and the blockchain to roll back a!! the operations done by a victim until a possible root of attack is found. Then, all the information on the attacks (type of activity/protocols, time, responsible connected device, etc.) are collected within a threat database (**47**) through **M8.**

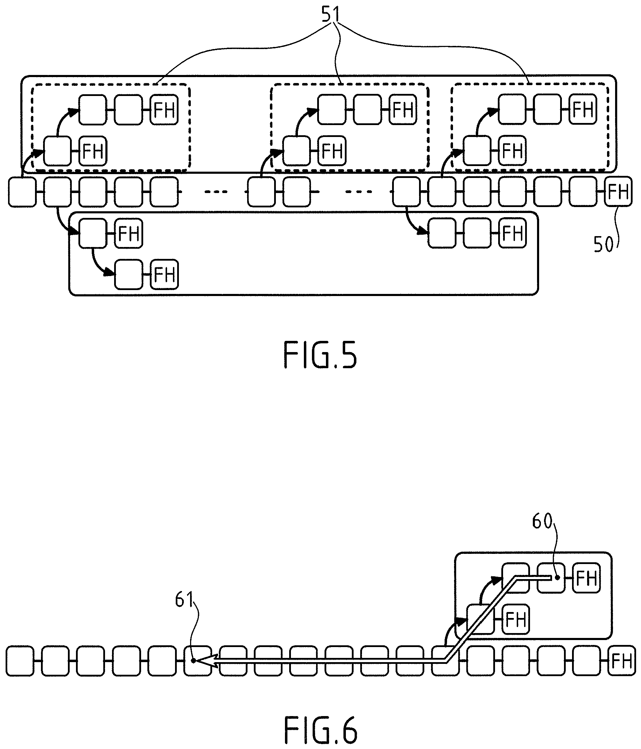

Figure 5 illustrates the enhanced blockchain built by the chain manager 42: it is composed of the standard blockchain (**50**) headed by a block head (**BH**), and other forked chains (**51**), each one headed by its own fork head block (**FH**). This enhanced blockchain is stored in chain database 43, and passed on to pattern inspector 45.

Figure 6 illustrates the inspection of enhanced blockchains performed by the threat detector. Once an anomaly (**60**) has been detected in a forked chain by the pattern inspector, the threat detector reviews all the transactions of the ledger in the forked chain and the blockchain message leading up to a network attack entry point (**61**).

The invention thus leverages unexpected behaviors within forked chains, as they represent different visions of the network's activity and might then describe malicious/strange behaviors or attacks which are not yet known/distributed on a global scale (e.g. a man in the middle attack where HTTP requests are eavesdropped and redirected to a recipient other than the intended one). As such, by collecting not only the main blockchain but also all the local and concurrent forked chains, the invention makes it is possible to derive a global network history which takes into account both global and local unexpected changes. These differences are then analyzed by the anomaly detection system which can detect footprints that the attacker or malicious software tried to remove or even malicious repetitive patterns that might represent the presence of an infected device within the network.

The security the invention introduces cannot be circumvented since, by exploiting the blockchain technology and its forked chains, it is not possible to alter all the replicas of the blockchain collected within each device in the network. As such, any trial aimed at changing or removing malicious activities or at creating fake activities will be recorded within the blockchain and, by linking the forked chain to the standard chain, it will be always possible to go back in time and to find the source of the problem or the attack entry point.

Elements such as the miner, the transaction filter, the fork broadcast, the chain manager, the anomaly detection system, the pattern inspector, or the threat detector, could each be e.g. hardware means like e.g. an ASIC, or a combination of hardware and software means, e.g. an ASIC and an FPGA, or at least one microprocessor and at least one memory with software modules located therein.

The invention is not limited to the described embodiments. The appended claims are to be construed as embodying all modifications and alternative constructions that may occur to one skilled in the art, and which fairly fall within the basic teaching as set forth herein.

The use of the verb "to comprise", "to include" or "to contain" and their conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. A method of detecting a security threat within a network (10) of peer connected devices (11, 12) that share a ledger of transactions between them under the form of exchanged blockchain messages (13, 31), wherein at least one of said connected devices comprises a miner and wherein the connected device containing the miner is adapted to analyze and to update received blockchain messages in a blockchain database, said received blockchain message being received either from said miner or from the network, said method **characterized in that** it further comprises the steps of:
- extracting, by a fork broadcast added to the miner, any forked chains (M5) from the blockchain messages (M1) before it is discarded and overwritten by the miner,
- comparing received blocks with locally stored blocks,
- if they do not match and the number of the received blocks is larger than the number of locally stored blocks, labeling the local chain as a fork
- building, by a chain manager, an enhanced blockchain (M6) by adding all forked chains (51) to be included in messages sent to the blockchain database; and
- inspecting, by anomaly detection system, the up to date enhanced blockchain (M7) and detect security threats;
- detecting, by a pattern inspector (45), an anomaly (60) based on patterns in the added forked chains in order to detect suspicious patterns in the enhanced blockchain; identifying, by a threat detector (46) once a behavior has been detected by the pattern inspector, the security threat by reviewing all transactions of the ledger in the forked chain in which an anomaly has been detected, and in the standard blockchain leading up to the network attack entry point; and
- including the enhanced blockchain in the exchanged blockchain messages.

2. The method of claim 1 further comprising the step at a device of simultaneously processing the standard blockchain, and building the enhanced blockchain.

3. The method of claim 1 or claim 2 wherein the step of detecting an anomaly further comprises the step of detecting behaviors in the added forked chains that were not accepted by the whole network.

4. A computer program comprising executable code that causes a computer to perform all the steps of a method in accordance with any one of claims 1 to 3 when executed.

5. A device (11) to be connected to a network (10) of peer connected devices where said connected devices share a ledger of transactions between them under the form of exchanged blockchain messages (13, 31), such device comprising a miner (20) being configured to analyze and update received blockchain messages in a blockchain database (21), said received blockchain message being received either from the miner or from one of said peer, said device **characterized in that** it further comprises:
the device being adapted to compare received blocks with locally stored blocks, and if they do not match and the number of the received blocks is larger than the number of locally stored blocks, the device being adapted to label the local chain as fork
- a fork broadcast (41) added to the miner, said fork broadcast being configured to extract any forked chains (M5) from the blockchain messages (M1) before it is discarded and overwritten by the miner;
- a chain manager (42) being configured to add all forked chains to the blockchain messages in order to build an enhanced blockchain (M6) to be included in messages sent to other devices in the network; and said chain manager being adapted to include the enhanced blockchain in the exchanged blockchain messages, and
- an anomaly detection system (44) being configured to inspect the enhanced blockchain (M7) and detect security threats, said anomaly detection system (44) comprising :
- a pattern inspector (45) configured to detect behaviors in the forked chains that were not accepted by the whole network, and
- a threat detector (46) configured to, once a behavior has been detected by the pattern inspector, inspect the sections of the standard blockchain linked to the forked chains containing the detected behavior, in order to recover the source of a security threat.

6. The device of claim 5, further comprising:
- a transaction filter (40) being configured to intercept blockchain messages and to forward them to both the miner (M2) and the chain manager (M3), wherein blockchain messages are processed in parallel by the miner and the chain manager.

7. The device of claim 6, wherein the transaction filter is further configured to collect metadata from the blockchain messages, and to discard duplicated blockchain messages received from the network.

8. The device of any of the claims 5-7, further comprising:
- a threat database (47) configured to collect information about the security threat.

## Patentansprüche

1. Verfahren zum Erkennen eines Sicherheitsrisikos innerhalb eines Netzwerks (10) gleichrangiger verbundener Vorrichtungen (11, 12), die sich ein Hauptbuch von Transaktionen in Form von ausgetauschten Blockchain-Nachrichten (13, 31) teilen, wobei mindestens eine der verbundenen Vorrichtungen einen Miner umfasst und wobei die den Miner enthaltende verbundene Vorrichtung geeignet ist, empfangene Blockchain-Nachrichten in einer Blockchain-Datenbank zu analysieren und zu aktualisieren, wobei die empfangene Blockchain-Nachricht entweder von dem Miner oder von dem Netzwerk empfangen wird, wobei das Verfahren **dadurch gekennzeichnet ist, dass** es darüber hinaus die folgenden Schritte umfasst:
- Extrahieren durch eine dem Miner hinzugefügte Gabelübertragung aller gegabelten Ketten (M5) aus den Blockchain-Nachrichten (M1), bevor sie verworfen und von dem Miner überschrieben wird;
- Vergleichen von empfangenen Blöcken mit lokal gespeicherten Blöcken;
- wenn diese nicht übereinstimmen und die Anzahl der empfangenen Blöcke größer ist als die Anzahl der lokal gespeicherten Blöcke, Kennzeichnen der lokalen Kette als Gabel;
- Aufbauen einer erweiterten Blockchain (M6) von einem Kettenmanager durch Hinzufügen aller gegabelter Ketten (51), die in Nachrichten einzubeziehen sind, die an die Blockchain-Datenbank gesendeten werden; und
- Überprüfen der aktuellen erweiterten Blockchain (M7) durch ein Anomalie-Erkennungssystem und Erkennen von Sicherheitsrisiken;
- Erkennen einer Anomalie (60) durch einen Musterprüfer (45) basierend auf Mustern in den hinzugefügten Gabelketten, um verdächtige Muster in der erweiterten Blockchain zu erkennen; Identifizieren des Sicherheitsrisikos durch einen Risikodetektor (46), sobald ein Verhalten durch den Musterprüfer entdeckt wurde, indem alle Transaktionen des Hauptbuchs in der gegabelten Kette, in der eine Anomalie erkannt wurde, und in der Standard-Blockchain, die zu dem Eingangspunkt des Netzwerkangriffs heraufführt, überprüft werden; und
- Einschließen der erweiterten Blockchain in die ausgetauschten Blockchain-Nachrichten.

2. Verfahren nach Anspruch 1, das darüber hinaus den Schritt bei einer Vorrichtung zum gleichzeitigen Verarbeiten der Standard-Blockchain und zum Aufbauen einer erweiterten Blockchain umfasst.

3. Verfahren nach Anspruch 1 oder Anspruch 2, wobei der Schritt zum Erkennen einer Anomalie darüber hinaus den Schritt zum Erkennen von Verhalten in den hinzugefügten gegabelten Ketten umfasst, die nicht von dem gesamten Netzwerk akzeptiert wurden.

4. Computerprogramm, das ausführbaren Code umfasst, der einen Computer dazu veranlasst, alle Schritte eines Verfahrens gemäß einem der Ansprüche 1 bis 3 durchzuführen, wenn es ausgeführt wird.

5. Vorrichtung (11), zu verbinden mit einem Netzwerk (10) gleichrangiger verbundener Vorrichtungen, wobei sich die verbundenen Vorrichtungen ein Hauptbuch von Transaktionen in Form von ausgetauschten Blockchain-Nachrichten (13, 31) teilen, wobei die Vorrichtung einen Miner (20) umfasst, der konfiguriert ist zum Analysieren und Aktualisieren empfangener Blockchain-Nachrichten in einer Blockchain-Datenbank (21), wobei die empfangene Blockchain-Nachricht entweder von dem Miner oder von einer der gleichrangigen Vorrichtungen empfangen wird, wobei die Vorrichtung **dadurch gekennzeichnet ist, dass** sie darüber hinaus Folgendes umfasst:
Vorrichtung, die dazu geeignet ist, empfangene Blöcke mit lokal gespeicherten Blöcken zu vergleichen, und, wenn diese nicht übereinstimmen und die Anzahl der empfangenen Blöcke größer ist als die Anzahl der lokal gespeicherten Blöcke, dazu geeignet ist, die lokale Kette als Gabel zu kennzeichnen
- eine Gabelübertragung (41), die dem Miner hinzugefügt ist, wobei die Gabelübertragung konfiguriert ist zum Extrahieren aller gegabelten Ketten (M5) aus den Blockchain-Nachrichten (M1), bevor sie verworfen und von dem Miner überschrieben wird;
- einen Kettenmanager (42), konfiguriert zum Hinzufügen aller gegabelter Ketten zu den Blockchain-Nachrichten, um eine erweiterte Blockchain (M6) aufzubauen, die in Nachrichten einzubeziehen ist, die an andere Vorrichtungen in dem Netzwerk gesendet werden; und wobei der Kettenmanager dazu geeignet ist, die erweiterte Blockchain in die ausgetauschten Blockchain-Nachrichten einzuschließen; und
- ein Anomalie-Erkennungssystem (44), konfiguriert zum Überprüfen der erweiterten Blockchain (M7) und Erkennen von Sicherheitsrisiken, wobei das Anomalie-Erkennungssystem (44) Folgendes umfasst:
- einen Musterprüfer (45), konfiguriert zum Erkennen von Verhalten in den gegabelten Ketten, die nicht von dem gesamten Netzwerk akzeptiert wurden; und
- einen Risikodetektor (46), konfiguriert zum Überprüfen der Abschnitte der Standard-Blockchain, die mit den gegabelten Ketten verknüpft ist, die das erkannte Verhalten enthalten, sobald ein Verhalten durch den Musterprüfer entdeckt wurde, um die Quelle eines Sicherheitsrisikos wiederherzustellen.

6. Vorrichtung nach Anspruch 5, die darüber hinaus Folgendes umfasst:
- einen Transaktionsfilter (40), konfiguriert zum Abfangen von Blockchain-Nachrichten und zum Weiterleiten zu dem Miner (M2) und dem Kettenmanager (M3), wobei die Blockchain-Nachrichten parallel von dem Miner und dem Kettenmanager verarbeitet werden.

7. Vorrichtung nach Anspruch 6, wobei der Transaktionsfilter darüber hinaus konfiguriert ist zum Sammeln von Metadaten aus den Blockchain-Nachrichten und zum Verwerfen duplizierter Blockchain-Nachrichten, die von dem Netzwerk empfangen wurden.

8. Vorrichtung nach einem der Ansprüche 5-7, die darüber hinaus Folgendes umfasst:
- eine Risikodatenbank (47), konfiguriert zum Sammeln von Informationen über das Sicherheitsrisiko.

## Revendications

1. Procédé permettant de détecter une menace de sécurité à l'intérieur d'un réseau (10) de dispositifs connectés pairs (11, 12) qui partagent un registre de transactions entre eux sous la forme de messages de chaîne de blocs échangés (13, 31), au moins un desdits dispositifs connectés comportant un mineur et le dispositif connecté contenant le mineur étant conçu pour analyser et pour mettre à jour des messages de chaîne de blocs reçus dans une base de données de chaînes de blocs, ledit message de chaîne de blocs reçu étant reçu à partir dudit mineur ou à partir du réseau, ledit procédé étant **caractérisé en ce qu'**il comprend en outre :
- l'extraction, par une diffusion de fourches ajoutée au mineur, de toutes les chaînes à fourche (M5) à partir des messages de chaîne de blocs (M1) avant qu'elles ne soient rejetées et écrasées par le mineur,
- la comparaison des blocs reçus avec des blocs stockés localement,
- s'ils ne correspondent pas et que le nombre des blocs reçus est supérieur au nombre de blocs stockés localement, étiqueter la chaîne locale comme étant une fourche
- la construction, par un gestionnaire de chaîne, d'une chaîne de blocs améliorée (M6) en ajoutant toutes les chaînes à fourche (51) devant être incluses dans des messages envoyés à la base de données de chaînes de blocs ; et
- l'inspection, par un système de détection d'anomalies, de la chaîne de blocs améliorée mise à jour (M7) et la détection de menaces de sécurité ;
- la détection, par un inspecteur de schémas (45), d'une anomalie (60) sur la base de schémas dans les chaînes à fourche ajoutées afin de détecter des schémas suspects dans la chaîne de blocs améliorée ; l'identification, par un détecteur de menaces (46) une fois qu'un comportement a été détecté par l'inspecteur de schémas, de la menace de sécurité en examinant toutes les transactions du registre dans la chaîne à fourche dans laquelle une anomalie a été détectée, et dans la chaîne de blocs standard conduisant au point d'entrée d'attaque de réseau ; et
- l'inclusion de la chaîne de blocs améliorée dans les messages de chaîne de blocs échangés.

2. Procédé selon la revendication 1, comprenant en outre, au niveau d'un dispositif, le traitement de la chaîne de blocs standard, et la construction simultanée de la chaîne de blocs améliorée.

3. Procédé selon la revendication 1 ou la revendication 2, dans lequel l'étape de détection d'une anomalie comprend en outre la détection de comportements dans les chaînes à fourche ajoutées qui n'ont pas été acceptées par le réseau entier.

4. Programme informatique comprenant un code exécutable qui amène un ordinateur à mettre en oeuvre toutes les étapes d'un procédé selon l'une quelconque des revendications 1 à 3 lorsqu'il est exécuté.

5. Dispositif (11) destiné à être connecté à un réseau (10) de dispositifs connectés pairs, dans lequel lesdits dispositifs connectés partagent un registre de transactions entre eux sous la forme de messages de chaîne de blocs échangés (13, 31), un tel dispositif comportant un mineur (20) configuré pour analyser et mettre à jour des messages de chaîne de blocs reçus dans une base de données de chaînes de blocs (21), ledit message de chaîne de blocs reçu étant reçu à partir du mineur ou à partir d'un dudit pair, ledit dispositif étant **caractérisé en ce qu'**il comprend en outre :
le dispositif étant conçu pour comparer des blocs reçus avec des blocs stockés localement, et s'ils ne correspondent pas et que le nombre des blocs reçus est supérieur au nombre de blocs stockés localement, le dispositif étant conçu pour étiqueter la chaîne locale comme étant une fourche
- une diffusion de fourches (41) ajoutée au mineur, ladite diffusion de fourches étant configurée pour extraire toutes les chaînes à fourche (M5) à partir des messages de chaîne de blocs (M1) avant qu'elles ne soient rejetées et écrasées par le mineur ;
- un gestionnaire de chaîne (42) configuré pour ajouter toutes les chaînes à fourche aux messages de chaîne de blocs afin de construire une chaîne de blocs améliorée (M6) devant être incluse dans des messages envoyés à d'autres dispositifs dans le réseau ; et ledit gestionnaire de chaîne étant conçu pour inclure la chaîne de blocs améliorée dans les messages de chaîne de blocs échangés, et
- un système de détection d'anomalies (44) configuré pour inspecter la chaîne de blocs améliorée (M7) et détecter des menaces de sécurité, ledit système de détection d'anomalie (44) comprenant :
- un inspecteur de schémas (45) configuré pour détecter des comportements dans les chaînes à fourche qui n'ont pas été acceptées par le réseau entier, et
- un détecteur de menaces (46) configuré pour inspecter, une fois qu'un comportement a été détecté par l'inspecteur de schémas, les sections de la chaîne de blocs standard reliée aux chaînes à fourche contenant le comportement détecté, afin de récupérer la source d'une menace de sécurité.

6. Dispositif selon la revendication 5, comprenant en outre :
- un filtre de transaction (40) configuré pour intercepter des messages de chaîne de blocs et pour les transmettre au mineur (M2) ainsi qu'au gestionnaire de chaîne (M3), des messages de chaîne de blocs étant traités en parallèle par le mineur et le gestionnaire de chaîne.

7. Dispositif selon la revendication 6, dans lequel le filtre de transaction est en outre configuré pour collecter des métadonnées à partir des messages de chaîne de blocs, et pour rejeter des messages de chaîne de blocs dupliqués reçus à partir du réseau.

8. Dispositif selon l'une quelconque des revendications 5-7, comprenant en outre :
- une base de données de menaces (47) configurée pour collecter des informations concernant la menace de sécurité.
